# EUROPÄISCHE PATENTSCHRIFT

(11) **EP 0 612 088 B1**
(45) Veröffentlichungstag und Bekanntmachung des Hinweises auf die Patenterteilung: **04.06.1997**
(21) Anmeldenummer: 94101627.1
(22) Anmeldetag: 03.02.1994
(51) Int. Cl.: H01H 19/00, H01H 19/62, H01H 67/02

(54) **Betriebsartenschalter**
Function selector
Sélecteur de fonctions

(30) Priorität: 15.02.1993 DE 4304406
(43) Veröffentlichungstag der Anmeldung: 24.08.1994
(73) Patentinhaber: DIEHL GMBH & CO., 90478 Nürnberg (DE)
(72) Erfinder: Spitzl, Walter, D-90562 Heroldsberg (DE); Potthof, Erwin, D-90552 Röthenbach/Peg. (DE)

(56) Entgegenhaltungen:
- EP-A- 0 050 804
- EP-A- 0 522 489
- DE-A- 3 307 467

## Beschreibung

Die Erfindung betrifft einen Betriebsartenschalter für elektrische Geräte, insbesondere Elektroherde, der in einem dem Benutzer zugänglichen Bedienungspanel angeordnet ist. Ein solcher Betriebsartenschalter ist z.B. aus EP-A-0 522 489 bekannt.

Bisher ist es in Elektrogroßgeräten, insbesondere bei Elektroherden, üblich, im Bedienungspanel die Last- und die Signalverdrahtung für die einzelnen Komponenten anzuordnen. Dies führt dazu, daß der Netzanschluß, der bei solchen Geräten an der Rückseite angebracht ist, zunächst nach vorne zum Bedienungspanel geführt werden muß und von dort nach Durchschleifung durch die Schalt- und Steuerelemente wieder zu den Starkstromverbrauchern im Gerät, also insbesondere den Heizungen, geführt werden muß. Ungünstig ist ferner, daß die Schaltelemente Wärme in der Nähe der Signalverdrahtung und der Schwachstromkomponenten erzeugen.

Der Betriebsartenschalter bei solchen Geräten dient zur Ein- und Abschaltung der Energiezufuhr zu den Starkstromverbrauchern sowie zu den Netzteilen für die Schwachstromversorgung. Dies führt dazu, daß durch den Betriebsartenschalter im Bedienungspanel die Lastströme fließen.

Aufgabe der Erfindung war es nun, eine Lösung für einen Betriebsartenschalter zu schaffen, die eine Trennung der Last-Verdrahtung und der Signalverdrahtung im Herd ermöglicht, so daß die Lastverdrahtung im Bereich der energieverbrauchenden Komponenten konzentriert werden kann. Damit soll eine Verringerung des Verdrahtungsaufwandes und eine Verminderung der Wärmeerzeugung im Bereich des Bedienungspanels erzielt werden.

Zur Lösung dieser der Erfindung gestellten Aufgabe wird vorgeschlagen, daß im Bedienungspanel nur das Steuerteil jedes Betriebsartenschalters angeordnet ist, wobei dieses Steuerteil einen Eingabe-Codierschalter mit einer Codierscheibe zur Erzeugung von stellungsabhängigen Dauerimpulsen aufweist, daß ferner ein Motor zum Antrieb einer oder mehrerer Kurvenscheiben oder Nockenscheiben zum Schalten der den verschiedenen Betriebsarten zugeordneten Verbraucher vorgesehen ist, daß weiterhin ein Überwachungs-Codierschalter mit den Kurven- oder Nockenscheiben gekoppelt ist, der ebenfalls stellungsabhängige Dauerimpulse erzeugt, und zur Feststellung der aktuellen Position der Kurven- oder Nockenscheiben dient und daß schließlich ein Vergleicher vorgesehen ist, der die Impulse beider Codierschalter vergleicht und bei Nichtübereinstimmung den Motor so lange einschaltet, bis er die Übereinstimmung der genannten Impulse feststellt.

Die Erfindung geht somit von dem Gedanken aus, im Bedienungspanel nurmehr ein mit Schwachstrom betriebenes Steuerteil des Betriebsartenschalters anzuordnen und die eigentliche Schaltfunktion, nämlich das Schalten der Energiezufuhr zu den Verbrauchern, durch ein motorisch getriebenes Bauteil an anderer Stelle des Geräts vorzunehmen. Die schaltungsmäßige Korrelation zwischen dem Steuerteil und dem Schaltteil des Betriebsartenschalters wird durch zwei Codierschalter vorgenommen, deren Impulse in einem Vergleicher überprüft werden. So lange keine Übereinstimmung der Impulse der Codierschalter besteht, wird der Motor für das Schaltteil bestromt und verdreht damit die Kurven- bzw. Nockenscheiben, die die Schaltung der Verbraucher bewirken.

Weiterbildungen dieser Variante der Erfindung sind in den Unteransprüchen 2 bis 7 gekennzeichnet.

Eine besonders interessante Variante der Erfindung sieht unter Benutzung der vorstehend beschriebenen kennzeichnenden Merkmale der Erfindung vor, daß zwischen den Eingabe-Codierschalter und den Vergleicher eine Programmsteuereinheit eingeschaltet ist, die es gestattet, die Betriebsart programmgesteuert ein- und auszuschalten und/oder sie zu verändern.

Diese Lösung ermöglicht es, dem Betriebsartenschalter neben seiner Ein- und Ausschaltfunktion eine Steuerfunktion zuzuordnen, in dem Sinne, daß die Ein- und Abschaltung der Verbraucher gemäß der eingestellten Betriebsart des Herdes nach einem Programm zeit- oder auch temperaturgesteuert erfolgen kann.

Eine bevorzugte Weiterbildung dieser Variante der Erfindung sieht vor, daß die Programmsteuereinheit zusätzlich durch Sensoren beaufschlagt wird, die den Programmablauf in dem Gerät innerhalb der einzelnen Betriebsarten überwachen, sowie, daß der Motor als vorwärts- und rückwärtslaufend ausgebildet ist. Bei einer solchen Ausgestaltung ist es möglich, daß durch die von den Sensoren gesteuerte Programmsteuereinheit eine Taktung der Energiezufuhr zu den Verbrauchern durch Ein- und Ausschalten des Betriebsartenschalters (Vorwärts-/Rückwärtslauf der Kurven- oder Nockenscheiben) erfolgt. Die Taktung erfolgt somit durch Umsteuern des Motors in seiner Drehrichtung so lange, daß die Kurven- oder Nockenscheiben jeweils in ihre Einschalt- oder in ihre Ausschaltstellung gedreht werden. Eine derartige Ausbildung der Taktung bietet zusätzlich den Vorteil, daß das in einem Herd üblicherweise vorhandene Taktrelais für die Energiezufuhr zu den Verbrauchern entfallen kann.

Diese Weiterbildung der Erfindung ermöglicht auch den Betrieb des Kochfeldes eines Elektroherdes und führt dazu, daß auch die Betätigungselemente für die einzelnen Kochfelder, die sogenannten Kochstellenregler, nurmehr in Schwachstromtechnik ausgeführt sein müssen und die Taktung der Energiezufuhr zu den Kochstellen an anderer Stelle im Herd stattfinden kann.

Diese und noch weitere Ausbildungen der Erfindung sollen nachfolgend an zwei Ausführungsbeispielen anhand der Zeichnung noch näher erläutert werden.

Es zeigen:
- Figur 1: ein erstes Ausführungsbeispiel der Erfindung in einem Blockschaltbild;
- Figur 2: ein zweites Ausführungsbeispiel unter Einbeziehung einer Programmsteuerung;
- Figur 3: eine Nockentrommel zur Schaltung der Verbraucher;
- Figur 4: die Codierscheibe des Überwachungscodierschalters;
- Figur 5: die Codierscheibe des Eingabecodierschalters.

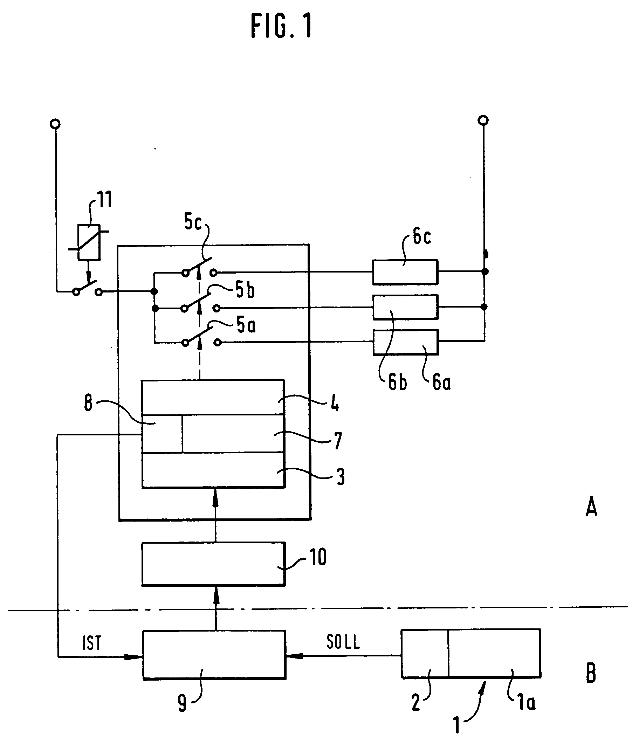

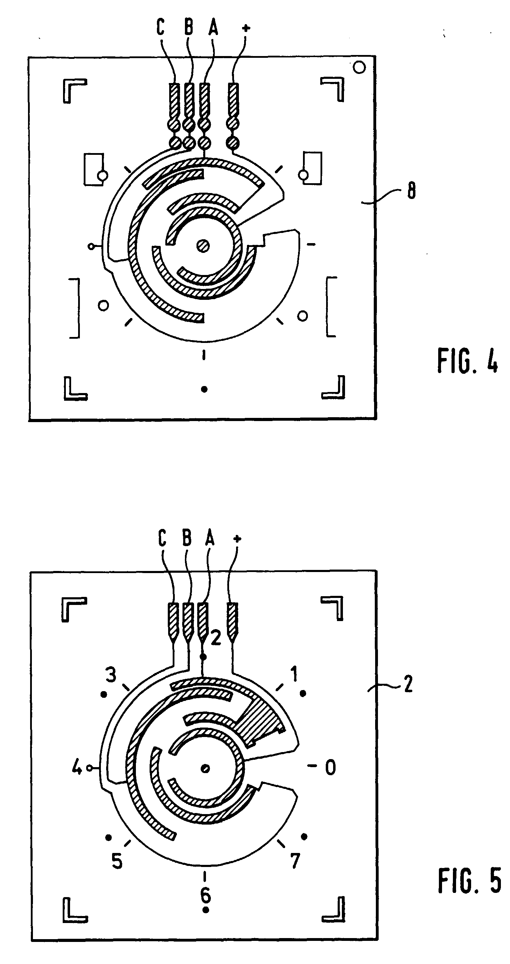

In Figur 1 ist mit 1 ein in das Bedienungspanel des Elektrogerätes eingebauter Betriebsartenschalter bezeichnet. Bei einem Elektroherd können mit diesem Schalter einzeln oder in Kombination die nachfolgenden Betriebsarten eingeschaltet werden: Kochfeld, Backofen mit Schaltung der Ober- und/oder Unterhitze oder der Umluftheizung, der Grill, die Selbstreinigung. Der Betriebsartenschalter ist als Eingabe-Codierschalter 1a ausgebildet und weist eine Codierscheibe 2 auf, die anhand von Figur 5 noch näher erläutert wird. Mit 3 ist ein Motor bezeichnet, mit dessen Abtrieb eine oder mehrere Kurvenscheiben oder Nockenscheiben 4 gekoppelt sind. Diese Scheiben 4 betätigen Kontakte 5a bis 5c, die zur Schaltung von Starkstromverbrauchern 6a bis 6c dienen. Die Zahl der Verbraucher 6 und der entsprechenden Schalter 5 kann selbstverständlich auch ungleich 3 sein. Die bevorzugte Ausführung der Scheiben 4 sieht beispielsweise eine Kurvenscheibe, welche mehrere Schaltpositionen für die Betätigung der drei Schalter 5a bis 5c aufweist, z.B. durch drei konzentrische Ringe mit Erhebungen oder Vertiefungen an den gewünschten Schaltpunkten. Bei der Verwendung von Nockenscheiben ist entweder die Anordnung von drei nebeneinander angeordneten Nockenscheiben oder eine Ausbildung als Trommel mit mehreren Nockenbahnen zweckmäßig. Wichtig ist in allen Fällen, daß sich die Schaltpositionen für die drei Schalter 5a bis 5c von der einen Betriebsartstellung zur anderen nicht überschneiden, sondern zwischen der Betätigung dieser Schalter ein ausreichender zeitlicher Abstand bleibt.

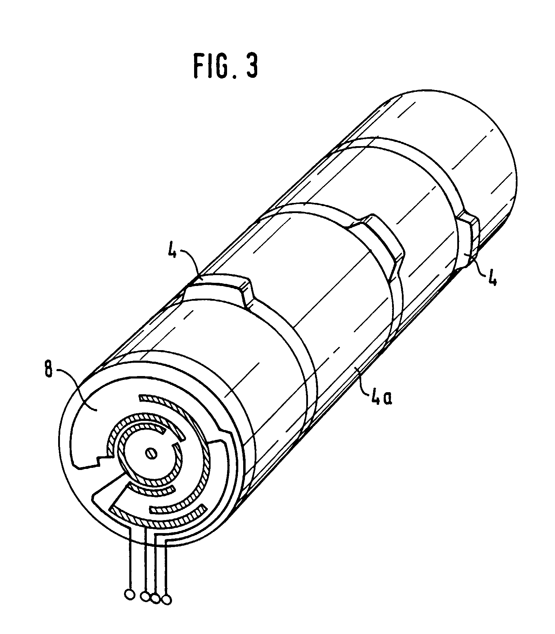

Gekoppelt mit den Kurven- oder Nockenscheiben 4 ist ein Überwachungs-Codierschalter 7 mit einer Codierscheibe 8, welche anhand von Figur 4 noch näher erläutert wird. Diese Codierscheibe 8 kann beispielsweise unmittelbar an einer Nockentrommel 4 angeordnet werden, wie dies in Figur 3 dargestellt ist oder sie kann durch Leiterplatten mit Leiterbahnen realisiert sein, wie in Fig. 4 dargestellt. Durch die Zuordnung der Codierscheibe 8 zu den Kurven- oder Nockenscheiben 4 werden die einzelnen Schaltpunkte für die Verbraucher elektronisch definiert. Beide Codierschalter 2 und 7 geben jeweils codierte Dauerimpulse entweder in serieller oder in paralleler Form aus. Ein Vergleicher 9 wertet diese stellungsabhängigen Impulsfolgen der beiden Codierschalter aus. So lange keine Übereinstimmung dieser Impulsfolgen besteht, gibt der Vergleicher 9 ein Steuersignal an einen Motorschalter 10 ab, welcher den Motor 3 einschaltet. In die Netzstromversorgung für die Verbraucher 6a bis 6c ist schließlich noch ein Relais 11 eingeschaltet, welches zur Taktung der Energiezufuhr für die Verbraucher, z.B. die Backofenheizung dient.

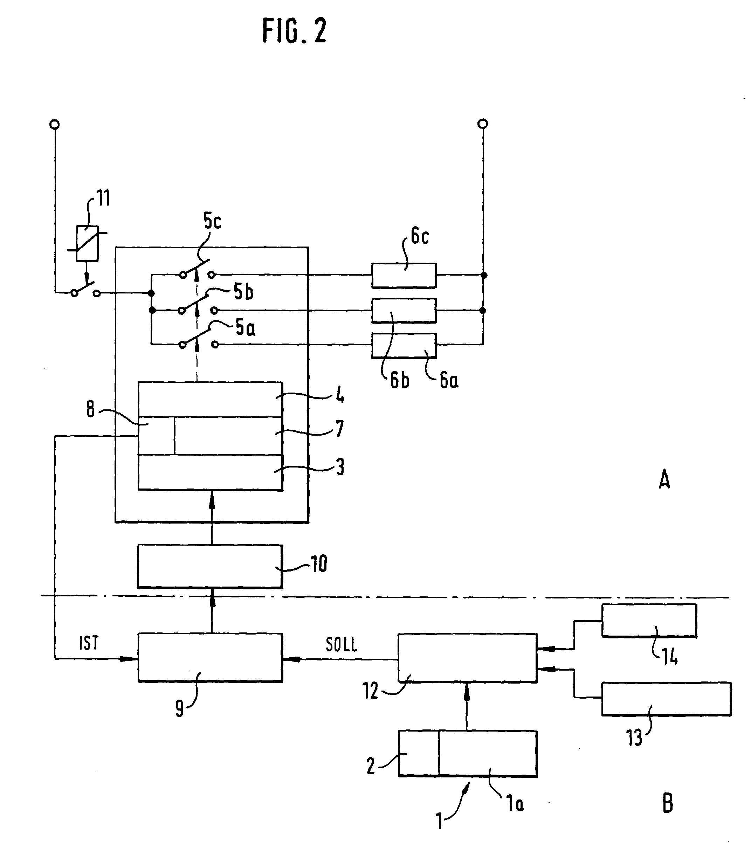

In Figur 1 und 2 ist mit A jener Teil im Elektrogerät bezeichnet, der die mit Starkstrom betriebenen Schalt- und Lastelemente aufweist, wohingegen im Teil B die mit Schwachstrom betriebenen und im Bedienungspanel angeordneten Teile umfaßt.

Im Sinne der Erfindung wäre es möglich, anstatt eines durchlaufenden Motors 3 einen Schrittmotor zu verwenden. In diesem Falle könnte die Codierscheibe 8 durch eine einfache elektrische Schaltscheibe mit mehreren Schaltpositionen und einer definierten Nullstellung ersetzt sein. Die Codierscheibe 2 könnte entfallen. Durch das Steuerteil des Betriebsartenschalters 1 würden an den Motor nur Schaltimpulse gegeben, deren Zahl mit der Zahl der Impulse verglichen wird, die die elektrische Schaltscheibe über die Zahl der durchgeführten Motorschritte zurückmeldet. Im Sinne der Erfindung wäre es auch möglich, als Betriebsartenschalter 1 Tasten mit codierter Impulsausgabe zu verwenden. In diesem Falle könnte die Codierscheibe 2 entfallen. Deren Impulsfolge würde durch die codierten Impulse der Taster ersetzt.

Die Funktion der beschriebenen Anordnung ist wie folgt: Durch Betätigung des Betriebsartenschalters 1 wird der Codierschalter 2 verdreht und gibt entsprechend der eingenommenen Schaltstellung eine dieser Stellung zugeordnete Impulsfolge an den Vergleicher 9 ab. Da dieser von der Codierscheibe 8, die sich noch in Nullstellung befindet, eine anders lautende Impulsfolge erhält, ist die Vergleichsbedingung nicht erfüllt und der Vergleicher 9 schaltet den Motorschalter 10 ein. Der Motor 3 läuft los und verdreht die Kurvenscheiben oder Nockenscheiben 4 zusammen mit der Codierscheibe 8 des Überwachungs-Codierschalters 7. Dieser gibt entsprechend den durchfahrenen Schaltstellungen der Kurvenscheiben oder Nockenscheiben 4 eine sich ändernde Impulsfolge an den Vergleicher ab. Die Codierung der Impulsfolgen der beiden Codierschalter 2 und 8 ist in einem einschrittigen Code, vorzugsweise in dem Gray-Code vorgenommen. Dadurch ist eine besonders einfache Auswertung im Vergleicher 9 möglich. Sobald die beiden Impulsfolgen gleich sind, ist die Vergleichsbedingung erfüllt, der Motor 3 wird abgeschaltet, die Kurvenscheiben oder Nockenscheiben 4 bleiben stehen; einer der Schalter 5a bis 5c ist betätigt und legt den zugehörigen Verbraucher 6a bis 6c an das Netz. Über das Relais 11 erfolgt entsprechend der eingestellten Heizstufe eine Taktung der Energiezufuhr zu diesem Verbraucher.

Für eine sichere Funktion der Anordnung ist es wichtig, daß die Schalter 5a bis 5c vollständig geschlossen oder geöffnet sind, ehe der Motor 3 durch Einlaufen des Codierschalters in die gewünschte Position abgeschaltet wird. Um dies sicherzustellen, ist die Codierscheibe 8 mit den mit ihr starr gekoppelten Kurvenscheiben oder Nockenscheiben 4 gegenüber der Codierscheibe 2 etwas verdreht, d.h. die zugeordneten Schaltpunkte auf der Codierscheibe 8 und den Kurven- oder Nockenscheiben 4 werden bei der Verdrehung dieser Elemente durch den Motor 3 etwas früher erreicht als auf der Codierscheibe 2. Diese winkelmäßige Verdrehung wurde bei einem Ausführungsbeispiel, bei welchem jeder Betriebsart ein Schaltwinkel auf den Codescheiben von 45° zugeordnet wurde, mit einem Winkel von 22,5° vorgenommen.

Bei der beschriebenen Funktion des Betriebsartenschalters kann eine, wenn auch seltene Fehlermöglichkeit dadurch auftreten, daß der Betriebsartenschalter kurzzeitig in eine Schaltposition verdreht und sofort wieder zurück in die vorherige Schaltposition verstellt wird. In einem solchen Fall wäre es möglich, daß einer der Kontakte 5a bis 5c bereits geschlossen ist, der Motor 3 durch das Zurückdrehen des Betriebsartenschalters 1 abgeschaltet wurde, der Betriebsartenschalter 1 und die Codescheibe 2 sich jedoch nicht in der dem geschlossenen Schalter 5a bis 5c zugeordneten Position befinden. In einem solchen Falle würde es zu einem unzulässigen Zustand der Anordnung kommen. Um dies zu vermeiden, wird der Motor 3 immer so lange bestromt, bis eine Übereinstimmung der Stellungen der beiden Codescheiben 2 und 8 erreicht ist und auch die zugeordnete Kontaktstellung übereinstimmt. Dies kann auch durch zeithaltende Mittel erfolgen oder auch durch eine besondere Gestaltung der Codierscheiben 2 und 8.

In Figur 2 ist eine bevorzugte Variante der Erfindung dargestellt, wobei in der Zeichnung die gleichen Bauteile mit gleichen Bezugszeichen wie in Figur 1 bezeichnet sind. Bei dieser Variante ist eine Programmsteuereinheit 12 zwischen den Betriebsartenschalter 1 und den Vergleicher 9 eingeschaltet. Die Programmdaten für diese Programmsteuereinheit werden entweder über Eingabeschalter 13 oder über Sensoren 14 bereitgestellt. Über den Betriebsartenschalter 1 wird eine bestimmte Betriebsart vorgewählt, die von der Programmsteuereinheit jedoch nur entsprechend dem gewählten Programm weitergegeben wird. Dies kann bei einer Zeitsteuerung z.B. beinhalten, daß das Elektrogerät erst nach einer Stunde nach Betätigung des Betriebsartenschalters eingeschaltet und in der vorgewählten Betriebsart betrieben wird. Die Abschaltung kann zeitgesteuert oder über einen Sensor 14 auch temperatur- oder feuchtigkeitsgesteuert erfolgen. Auch jeder andere Sensor, welcher die Wirkung des eingeschalteten Verbrauchers 6a bis 6c überwacht, kann eine Steuerfunktion auf die Programmsteuereinheit 12 ausüben. Das Programm der Programmsteuereinheit kann nun auch so ausgebildet sein, daß in einer ausgewählten Betriebsart der entsprechende Verbraucher 6a bis 6c getaktet Energie erhalten soll. Für eine solche Arbeitsweise wird der Umstand ausgenützt, daß zwischen den einzelnen Schaltstellungen der Codierscheibe 8 und den Kurvenscheiben oder Nockenscheiben 4 eine Nullstellung vorgesehen ist. Es wird daher der Motor 3 von der Programmsteuereinheit 12 entsprechend den gewünschten Taktzeiten in einer Drehrichtung angetrieben und die Kurvenscheiben oder Nockenscheiben 4 in eine der gewünschten Betriebsart zugeordnete Schaltstellung gebracht; soll die Energiezufuhr im Rahmen der Taktung unterbrochen werden, wird der Motor angesteuert und verdreht die Codierscheibe 8 und die Kurvenscheiben oder Nockenscheiben 4 in die nächstliegende Nullstellung, wodurch der entsprechende Schalter 5a bis 5c wieder geöffnet wird. Entsprechend den vorgegebenen Taktimpulsen durch die Programmsteuereinheit wird dieser Vorgang entsprechend häufig wiederholt; mit anderen Worten, der Motor, die Codescheibe 8 und die Kurvenscheiben oder Nockenscheiben 4 oszillieren zwischen der Ein- und der Ausschaltstellung eines der Schalter 5a bis 5c.

Programmsteuerungen der beschriebenen Art können naturgemäß in sehr weiten Bereichen variiert werden und es ist daher mit der beschriebenen Anordnung möglich, ganze Back- und Bratprogramme, aber auch Kochprogramme am Kochfeld eines Herdes auszuführen. Um derartige Möglichkeiten zu realisieren, verwendet man zweckmäßigerweise die Herdschaltuhr des Elektroherdes als Programmsteuereinheit. In diesem Zusammenhang ist es auch möglich, eine Sicherheitsabschaltung des Herdes durch Rückstellen des Betriebsartenschalters in die Nullstellung nach einer vorbestimmten Betriebszeit vorzunehmen.

In Figur 3 ist eine mögliche Ausführungsform der Anordnung mehrerer Nockenscheiben 4 in Form einer Nockentrommel 4a dargestellt. Die Codierscheibe 8 des Überwachungscodierschalters 7 kann, als eine mögliche Ausführung einer solchen Scheibe, an der Stirnseite dieser Trommel in Form von Leiterbahnen aufgebracht sein. Alternativ und in bevorzugter Ausführung ist die Codierscheibe 8 jedoch, wie in Figur 4 dargestellt, als Leiterplatte ausgebildet, auf der eine Reihe von Leiterbahnen dargestellt sind. Die Anschlüsse der Leiterbahnen sind mit "+" sowie mit A, B und C bezeichnet. Der Anschluß "+" geht an die innerste, für alle Schaltstellungen gemeinsame Leiterbahn, der Anschluß A an die äußerste, der Anschluß B an die mittlere und der Anschluß C an die innerste der drei Schaltbahnen. Ein mit der Drehachse des Motors gekoppelter, in der Zeichnung nicht dargestellt Abtaster mit vier Federn überstreicht die erwähnten vier Leiterbahnen. Die Anordnung der Schaltstellen der Leiterbahnen, es sind insgesamt acht Schaltstellungen vorgesehen, sind jeweils um 45° versetzt.

In Figur 5 ist die Codierscheibe 2 der Steuereinheit des Betriebsartenschalters 1 dargestellt. Die grundsätzliche Ausbildung der Leiterbahnen auf der Leiterplatte ist in gleicher Weise vorgenommen wie bei der Codierscheibe 8. Aus den vorstehend erläuterten Gründen ist für eine sichere Ein- und Ausschaltung der Verbraucher das Bild dieser Leiterbahnanordnung gegenüber jenem von Figur 4 um 22,5° im Uhrzeigersinn verdreht. Dies bedeutet, nachdem eine zeitliche Zuordnung zwischen den Schaltstellungen der Abtaster für beide Codierscheiben 2 und 8 besteht, daß die Schaltpositionen auf der Codierscheibe und damit die der Nockenscheiben zeitlich etwas früher erreicht werden als die entsprechenden Schaltstellungen auf der Codierscheibe 2. Die Anschlüsse "+", A, B und C sowie die Ausbildung des Abtasters der Leiterbahn ist identisch wie bei Codierscheibe 8.

## Patentansprüche

1. Betriebsartenschalter (1) für elektrische Geräte, insbesondere Elektroherde, der in einem dem Benutzer zugänglichen Bedienungspanel angeordnet ist,
dadurch gekennzeichnet,
daß im Bedienungspanel nur das Steuerteil des Betriebsartenschalters (1) angeordnet ist, wobei dieses Steuerteil einen Eingabe-Codierschalter (1a) mit einer Codierscheibe (2) zur Erzeugung von stellungsabhängigen Dauerimpulsen aufweist,
daß ferner ein Motor (3) zum Antrieb einer oder mehrerer Kurvenscheiben oder Nockenscheiben (4) zum Schalten der den verschiedenen Betriebsarten zugeordneten Verbraucher (6a,6b,6c) vorgesehen ist,
daß weiterhin ein Überwachungs-Codierschalter (7) mit den Kurven- oder Nockenscheiben (4) gekoppelt ist, der ebenfalls stellungsabhängige Dauerimpulse erzeugt, und zur Feststellung der aktuellen Position der Kurven- oder Nockenscheiben (4) dient und
daß schließlich ein Vergleicher (9) vorgesehen ist, der die Impulse beider Codierschalter (1a,7) vergleicht und bei Nichtübereinstimmung den Motor (3) so lange einschaltet, bis er die Übereinstimmung der genannten Impulse feststellt.

2. Betriebsartenschalter nach Anspruch 1,
dadurch gekennzeichnet,
daß in einem Elektroherd mehrere oder alle der nachfolgenden Betriebsarten über den Betriebsartenschalter (1) einzeln oder in Kombination einschaltbar sind: Kochfeld; Backofen: Ober und/oder Unterhitze, Umluft; Grill; Selbstreinigung.

3. Betriebsartenschalter nach Anspruch 1,
dadurch gekennzeichnet,
daß auf den Codierscheiben (2,8) der beiden Codierschalter (1a,7) einschrittige Codes, insbesondere ein Gray-Code verwendet sind.

4. Betriebsartenschalter nach Anspruch 1,
dadurch gekennzeichnet,
daß eine Kurven- oder Nockenscheibe (4) mit so vielen Schaltstellen, oder so viele Nockenscheiben (4) mit jeweils einer Schaltstelle, wie mögliche Betriebsarten vorgesehen sind.

5. Betriebsartenschalter nach Anspruch 1,
dadurch gekennzeichnet,
daß die Nockenscheiben (4) auf einer Nockentrommel (4a) zusammengefaßt sind.

6. Betriebsartenschalter nach Anspruch 1,
dadurch gekennzeichnet,
daß der Vergleicher (9) eine Übereinstimmung der Codierwerte der beiden Codierschalter (1a,7) erst dann feststellt, wenn die Schalter (5a,5b,5c) für die Verbraucher sicher geschaltet sind.

7. Betriebsartenschalter nach Anspruch 6,
dadurch gekennzeichnet,
daß die Kurvenscheibe(n) oder Nockenscheibe(n) (4) mit ihren Schaltpunkten gegenüber der Codierscheibe (8) des Überwachungs-Codierschalters (7) räumlich - und damit zeitlich - versetzt im Sinne eines Vorlaufes sind.

8. Betriebsartenschalter nach Anspruch 1,
dadurch gekennzeichnet,
daß zwischen den Eingabe-Codierschalter (1a) und den Vergleicher (9) eine Programmsteuereinheit (12) eingeschaltet ist, die es gestattet, die Betriebsart programmgesteuert ein- und auszuschalten und/oder sie zu verändern.

9. Betriebsartenschalter nach Anspruch 8,
dadurch gekennzeichnet,
daß die Programmsteuereinheit (12) zusätzlich durch Sensoren (14) beaufschlagt wird, die den Programmablauf in dem Gerät innerhalb der einzelnen Betriebsarten überwachen.

10. Betriebsartenschalter nach den Ansprüchen 1 oder 8,
dadurch gekennzeichnet,
daß der Motor (3) als vorwärts- und rückwärts laufend ausgebildet ist.

11. Betriebsartenschalter nach den Ansprüchen 9 und 10,
dadurch gekennzeichnet,
daß durch die von den Sensoren (14) gesteuerte Programmsteuereinheit (12) eine Taktung der Energiezufuhr zu den Verbrauchern durch Ein- und Ausschalten des Betriebsartenschalters (1) (Vorwärts-/Rückwärtslauf der Kurven- oder Nockenscheibe(n) (4) erfolgt.

## Claims

1. Function selector (1) for electrical appliances, in particular electric cookers, which is located in a control panel accessible to the user,
characterized in that
in the control panel only the control component of the function selector (1) is located, this control component having an input code switch (1a) with a code disk (2) for the production of position-dependent continuous pulses,
in that furthermore a motor (3) is provided for driving one or more cam disks or cam plates (4) for switching the consumers (6a,6b,6c) associated with the various functions,
in that furthermore a monitoring code switch (7) is coupled with the cam disks or cam plates (4) which also produces position-dependent continuous pulses, and serves to detect the actual position of the cam disks or cam plates (4) and
in that finally a comparator (9) is provided which compares the pulses of the two code switches (1a, 7) and, in the case of a non-match, switches on the motor (3) until it detects the matching of the specified pulses.

2. Function selector according to Claim 1,
characterized in that
in an electric cooker several or all of the following functions can be switched on individually or in combination by way of the function selector (1): cooking area; baking oven: upper and/or lower heat, circulating air; grill; automatic cleaning.

3. Function selector according to Claim 1,
characterized in that
as regards the code disks (2, 8) of the two code switches (1a, 7), cyclic codes, in particular a Gray code, are used.

4. Function selector according to Claim 1,
characterized in that
one cam disk or cam plate (4) is provided with as many switching points, or as many cam disks (4) each having one switching point are provided, as there are possible functions.

5. Function selector according to Claim 1,
characterized in that
the cam disks (4) are combined on a cam drum (4a).

6. Function selector according to Claim 1,
characterized in that
the comparator (9) detects a matching of the code values of the two code switches (1a, 7) only when the switches (5a,5b,5c) for the consumers are positively switched.

7. Function selector according to Claim 6,
characterized in that
the cam disk(s) or cam plates(s) (4) with their switching points are offset spatially - and consequently temporally - in the sense of an advance in relation to the code disk (8) of the monitoring code switch (7).

8. Function selector according to Claim 1,
characterized in that,
between the input code switch (1a) and the comparator (9), a programme control unit (12) is connected which allows the function to be switched on and off and/or changed by programme control.

9. Function selector according to Claim 8,
characterized in that
the programme control unit (12) is additionally acted upon by sensors (14), which monitor the course of the programme in the appliance within the individual functions.

10. Function selector according to Claims 1 or 8,
characterized in that
the motor (3) is designed to run forwards and backwards.

11. Function selector according to Claims 9 and 10,
characterized in that,
by means of the programme control unit (12) controlled by the sensors (14), a clocking of the power supply to the consumers takes place by switching on and off of the function selector (1) (forward/backward running of the cam disk(s) or cam plate(s) (4)).

## Revendications

1. Sélecteur de mode de fonctionnement (1) pour appareils électriques, en particulier cuisinières électriques, qui est placé dans un panneau de commande accessible à l'utilisateur,
caractérisé
en ce que dans le panneau de commande est placée uniquement la partie de commande du sélecteur de mode de fonctionnement (1), cette partie de commande comportant un codeur d'entrée (1a) avec un disque de codage (2) destiné à produire des impulsions permanentes dépendant de la position,
en ce qu'en outre un moteur (3) est prévu pour l'entraînement d'un ou de plusieurs disques de courbe ou disques de came (4) pour la sélection des récepteurs (6, 6b, 6c) associés aux différents modes de fonctionnement,
en ce qu'en outre un codeur de surveillance (7) est couplé aux disques de courbe ou aux disques de came (4), qui produit également des impulsions permanentes dépendant de la position, et qui sert à la fixation de la position actuelle des disques de courbe ou des disques de came (4) et
en ce qu'enfin il est prévu un comparateur (9), qui compare les impulsions des deux codeurs (1a, 7) et en cas de non concordance enclenche le moteur (3), jusqu'à ce qu'il constate la coïncidence des impulsions citées.

2. Sélecteur de mode de fonctionnement selon la revendication 1,
caractérisé
en ce que dans une cuisinière électrique plusieurs ou tous les modes de fonctionnement suivants peuvent être enclenchés individuellement ou en combinaison par le sélecteur de mode de fonctionnement (1) : zone de cuisson ; four : chauffage eau ou/et bas, air pulsé ; gril ; autonettoyage.

3. Sélecteur de mode de fonctionnement selon la revendication 1,
caractérisé
en ce que sur les disques de codage (2, 8) des deux codeurs (1a, 7) sont utilisés des codes cycliques, en particulier un code gray.

4. Sélecteur de mode de fonctionnement selon la revendication 1,
caractérisé
en ce qu'il est prévu un disque de courbe ou disque de came (4) avec autant de points de commutation, ou autant de disques de came (4) avec chaque fois un point de commutation, qu'il y a de modes de fonctionnement possibles.

5. Sélecteur de mode de fonctionnement selon la revendication 1,
caractérisé
en ce que les disques de came (4) sont réunis sur un tambour de came (4a).

6. Sélecteur de mode de fonctionnement selon la revendication 1,
caractérisé
en ce que le comparateur (9) ne constate une concordance des valeurs de codage des deux codeurs (1a, 7) que lorsque les interrupteurs (5a, 5b, 5c) pour les récepteurs sont sûrement enclenchés.

7. Sélecteur de mode de fonctionnement selon la revendication 6,
caractérisé
en ce que le(les) disque(s) de courbe ou disque(s) de came (4) avec leurs points de commutation sont décalés dans l'espace - et donc dans le temps - dans le sens d'une avance, par rapport au disque de codage (8) du codeur de surveillance (7).

8. Sélecteur de mode de fonctionnement selon la revendication 1,
caractérisé
en ce qu'entre le codeur d'entrée (1a) et le comparateur (9) est montée une unité de commande de programme (12), qui permet d'enclencher et de couper le mode de fonctionnement de manière programmée et/ou de le modifier.

9. Sélecteur de mode de fonctionnement selon la revendication 8,
caractérisé
en ce que l'unité de commande de programme (12) est sollicitée en supplément par des capteurs (14), qui contrôlent le déroulement du programme dans l'appareil à l'intérieur des différents modes de fonctionnement.

10. Sélecteur de mode de fonctionnement selon les revendications 1 ou 8,
caractérisé
en ce que le moteur (3) est conçu de manière à tourner vers l'avant et vers l'arrière.

11. Sélecteur de mode de fonctionnement selon les revendications 9 et 10,
caractérisé
en ce que par l'unité de commande de programme (12) commandée par les capteurs (14) il se produit une synchronisation de l'apport d'énergie vers les récepteurs par mise en service et coupure du sélecteur de mode de fonctionnement (1) (rotation avant/arrière du (des) disque(s) de courbe ou disque(s) de came (4)).
